# EUROPÄISCHE PATENTSCHRIFT

(11) **EP 2 776 704 B1**
(45) Veröffentlichungstag und Bekanntmachung des Hinweises auf die Patenterteilung: **06.07.2016**
(21) Anmeldenummer: 12756689.1
(22) Anmeldetag: 31.08.2012
(51) Int. Cl.: F03B 3/06

(54) **TURBINE FÜR EINE WASSERKRAFTANLAGE UND WASSERKRAFTANLAGE**
TURBINE FOR A HYDROELECTRIC POWER PLANT AND HYDROELECTRIC POWER PLANT
TURBINE POUR UN SYSTÈME DE GÉNÉRATION HYDROÉLECTRIQUE ET SYSTÈME HYDROÉLECTRIQUE

(30) Priorität: 08.11.2011 DE 102011085950
(43) Veröffentlichungstag der Anmeldung: 17.09.2014
(73) Patentinhaber: Wobben Properties GmbH, 26607 Aurich (DE)
(72) Erfinder: ROHDEN, Rolf, 26607 Aurich (DE); HÄUSER, Jan Niko, 26605 Aurich (DE); LAMBERTZ, Walter, 26605 Aurich (DE)
(74) Vertreter: Eisenführ Speiser
(86) Internationale Anmeldenummer: PCT/EP2012/066995
(87) Internationale Veröffentlichungsnummer: WO 2013/068144

(56) Entgegenhaltungen:
- DE-A1- 10 336 528
- DE-C- 666 385
- FR-A1- 2 487 437
- JP-A- 60 090 987
- US-A- 1 907 466

## Beschreibung

Die vorliegende Erfindung betrifft eine Turbine für eine Wasserkraftanlage und eine Wasserkraftanlage, wie z.B aus DE 666 385 bekannt.

WO 2010/026072 A2 zeigt eine Wasserkraftanlage mit einem Strömungskanal und einer Turbine in dem Strömungskanal, welche über eine Welle mit einem Generator verbunden ist. Der Strömungskanal weist einen ersten Abschnitt mit einer ersten Verjüngung und einen zweiten Abschnitt mit einem Durchmesser auf, der geringer ist als der der Aufweitung, wobei in dem zweiten Abschnitt die Turbine vorgesehen ist.

US 2009/0214343 A1 zeigt eine Turbine für eine Wasserkraftanlage. Die Turbine weist ein Laufrad mit einer Mehrzahl von Turbinenschaufeln und einem hinter dem Laufrad angeordneten Leitapparat auf, welcher als Stützapparat fungiert. Die Turbine weist eine im Wesentlichen kugelförmige Nabe auf und der Pitchwinkel der Turbinenschaufeln ist verstellbar ausgestaltet.

Es ist eine Aufgabe der vorliegenden Erfindung, eine im Hinblick auf den Stand der Technik verbesserte Wasserkraftanlage vorzusehen.

Diese Aufgabe wird durch eine Wasserkraftanlage nach Anspruch 1 gelöst.

Somit wird eine Turbine für ein Wasserkraftwerk mit einer Nabe, einer Vielzahl von Turbinenschaufeln, welche an der Nabe vorgesehen sind, einer Pitchwinkelverstelleinheit, welche mit den Turbinenschaufeln gekoppelt ist, zum Verstellen des Pitchwinkels der Turbinenschaufeln, einem doppelt wirkenden Hydraulikzylinder und einer damit verbundenen Kolbenstange vorgesehen. Die Kolbenstange ist mit der Pitchwinkelverstelleinheit derart gekoppelt, dass die Pitchwinkelverstelleinheit eine Rotationsbewegung durchführt, wenn die Kolbenstange in Längsrichtung bewegt wird. Der doppelt wirkende Hydraulikzylinder ist in einer Hydraulikkammer vorgesehen, welche über eine erste und zweite Hydraulikleitung gekoppelt ist, so dass durch Zuführen einer Hydraulikflüssigkeit durch die erste oder zweite Hydraulikleitung der doppelt wirkende Hydraulikzylinder verfahrbar ist und somit über die Kopplung mit der Kolbenstange und der Pitchwinkelverstelleinheit zu einer Verstellung der Pitchwinkel der Turbinenschaufeln führt.

Gemäß einem Aspekt der vorliegenden Erfindung weist die Turbine eine erste und zweite Hydraulikleitung zum Zuführen und Abführen von Hydraulikflüssigkeit auf. Die erste und zweite Hydraulikleitung ist in der Kolbenstange mit der ersten und zweiten Hydraulikleitung der Welle gekoppelt, so dass die Hydraulikflüssigkeit durch die erste und zweite Hydraulikleitung in die erste und zweite Hydraulikleitung der Kolbenstange in die Hydraulikkammer fließen kann, um den doppelt wirkenden Hydraulikzylinder zu verfahren.

Gemäß einem Aspekt der vorliegenden Erfindung wird die Hydraulikkammer durch den doppelt wirkenden Hydraulikzylinder in eine erste und zweite Kammer aufgeteilt. Die erste Hydraulikleitung der Kolbenstange mündet in die erste Kammer, und die zweite Hydraulikleitung mündet in die zweite Kammer.

Die Erfindung betrifft eine Wasserkraftanlage mit einem ersten Abschnitt, dessen Innendurchmesser in Durchflussrichtung kleiner wird, einem an den ersten Abschnitt anschließenden zweiten Abschnitt zur Aufnahme der Turbine, wobei der Innendurchmesser des zweiten Abschnitts zumindest teilweise eine Kugelkontur aufweist. Die Turbine weist eine Mehrzahl von Turbinenschaufeln auf, welche innerhalb des ersten Abschnitts im Bereich des Innendurchmessers mit einer Kugelkontur vorgesehen sind.

Die Erfindung betrifft den Gedanken, eine Wasserkraftanlage vorzusehen, welche einen ersten Abschnitt mit einem aufgeweiteten bzw. vergrößerten Durchmesser und einen zweiten Abschnitt aufweist, wobei die Turbine in dem zweiten Abschnitt des Strömungskanals vorgesehen ist. Zumindest an der Innenseite des zweiten Abschnittes des Strömungskanals ist im Bereich der Enden der Turbinenschaufeln eine zumindest abschnittsweise kugelförmige bzw. kugelabschnittsförmige Ausnehmung vorgesehen, so dass der Innendurchmesser des zweiten Abschnitts sich in Durchflussrichtung zunächst vergrößert und dann zum Ende des zweiten Abschnitts hin wieder verkleinert. Der Innendurchmesser des zweiten Abschnitts ist vorzugsweise an eine Kugelkontur angepasst.

Der Bereich des zweiten Abschnitts mit dem vergrößerten Innendurchmesser ist insbesondere auch an die verstellbaren Turbinenschaufeln angepasst.

Die Erfindung betrifft ebenfalls den Gedanken, eine Turbine mit hydraulisch verstellbaren Turbinenschaufeln für eine Wasserkraftanlage vorzusehen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Teilschnittansicht einer Wasserkraftanlage gemäß einem ersten Ausführungsbeispiel,
- Fig. 2: zeigt eine schematische Schnittansicht einer Wasserkraftanlage gemäß einem zweiten Ausführungsbeispiel,
- Fig. 3 bis 5: zeigen jeweils eine schematische Schnittansicht einer Turbine für eine Wasserkraftanlage gemäß einem dritten Ausführungsbeispiel,
- Fig. 6: zeigt eine schematische Schnittansicht einer Turbine und einer Welle für eine Wasserkraftanlage gemäß einem vierten Ausführungsbeispiel,
- Fig. 7A und 7B: zeigen jeweils eine perspektivische Ansicht einer Generatorwanne für einen Generator einer Wasserkraftanlage gemäß einem fünften Ausführungsbeispiel,
- Fig. 8: zeigt eine schematische Schnittansicht einer Turbine für eine Wasserkraftanlage gemäß einem sechsten Ausführungsbeispiel,
- Fig. 9: zeigt eine schematische Darstellung eines Teils einer Turbine für eine Wasserkraftanlage gemäß dem sechsten Ausführungsbeispiel,
- Fig. 10: zeigt einen Ausschnitt einer Turbine für eine Wasserkraftanlage gemäß einem siebten Ausführungsbeispiel und
- Fig. 11: zeigt eine schematische Darstellung eines Sicherheitsabschalters für eine Turbine für eine Wasserkraftanlage gemäß dem siebten Ausführungsbeispiel.

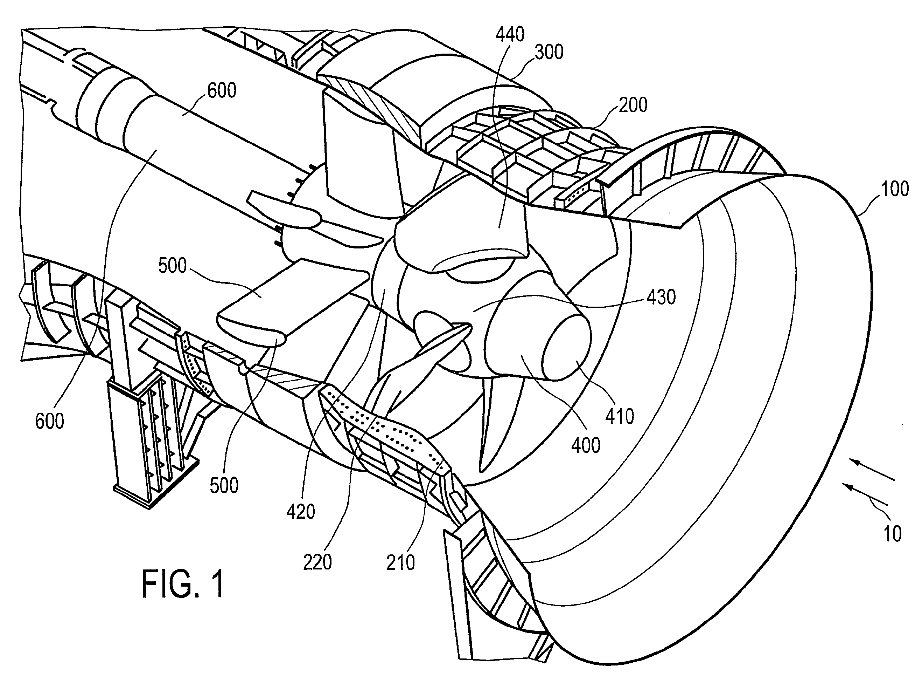

Fig. 1 zeigt eine schematische Teilschnittansicht einer Wasserkraftanlage gemäß einem ersten Ausführungsbeispiel. Die Wasserkraftanlage gemäß dem ersten Ausführungsbeispiel weist einen Wasserströmungskanal mit einem ersten Abschnitt 100, dessen Innendurchmesser sich in Durchflussrichtung verringert bzw. verjüngt, einem zweiten Abschnitt 200, dessen Innendurchmesser im Wesentlichen einer Kugelkontur folgt, und einen dritten Abschnitt 300 auf. In dem zweiten Abschnitt 200 ist eine Turbine 400 mit einer Spitze bzw. Nase 410, einer Nabe 430 und einer Mehrzahl von Turbinenschaufeln 440 vorgesehen. Im Bereich des dritten Abschnittes 300 ist ein Leitapparat 500 mit einer Mehrzahl von Leitapparatschaufeln vorgesehen. Das Wasser strömt in einer Durchströmungsrichtung 10 durch die Wasserkraftanlage, trifft zuerst auf die Turbinenschaufeln 440 und dann auf den Leitapparat 500.

Zusätzlich ist eine Welle 600 zwischen der Turbine 400 und einem Generator 900 (in Fig. 1 nicht gezeigt) vorgesehen. Durch die Welle 600 wird die durch die Turbine durch das Drehen der Turbinenschaufeln erzeugte Drehbewegung an den Generator weiter gegeben, der wiederum die Drehbewegung in eine Erzeugung bzw. Umwandlung in elektrischer Energie umsetzt.

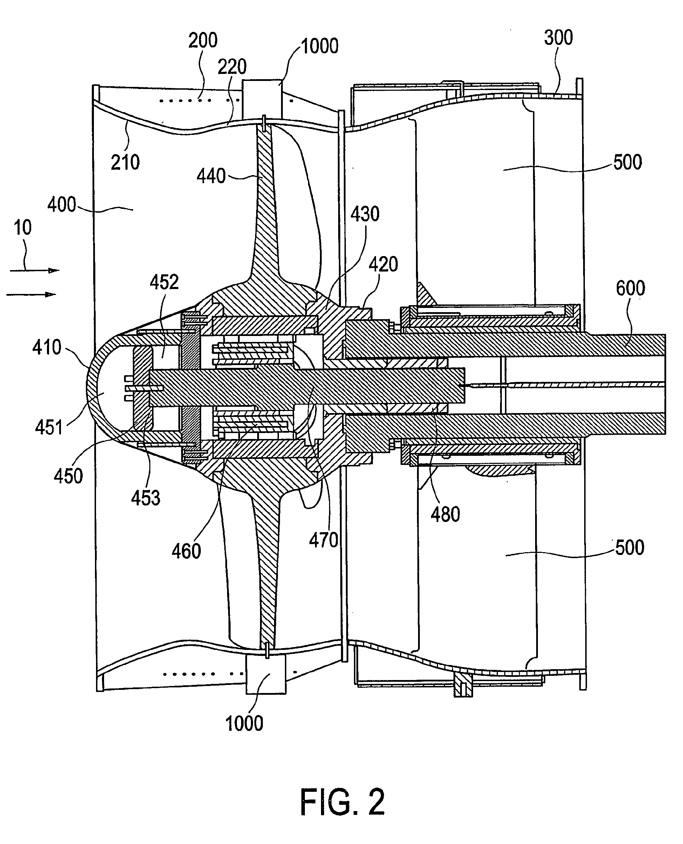

Fig. 2 zeigt eine schematische Schnittansicht einer Wasserkraftanlage gemäß einem zweiten Ausführungsbeispiel. Die Wasserkraftanlage gemäß dem zweiten Ausführungsbeispiel kann auf der Wasserkraftanlage gemäß dem ersten Ausführungsbeispiel beruhen. Die Turbine 400 ist im Wesentlichen im Bereich des zweiten Abschnittes 200 (s. Fig. 1) der Wasserkraftanlage vorgesehen. Die Turbine 400 weist eine Spitze 410 (ein erstes Ende) und ein zweites Ende 420 auf, welches in Durchströmrichtung 10 hinter dem ersten Ende 410 liegt. Zwischen dem ersten und zweiten Ende 410, 420 sind eine Mehrzahl von Turbinenschaufeln 440 vorgesehen, welche an der Nabe 430 drehbar befestigt sind. Der Pitchwinkel der Schaufeln 440 kann durch eine Pitchwinkelverstelleinheit 460 insbesondere hydraulisch verstellt werden.

Die Pitchwinkelverstelleinheit 460 weist einen doppelt wirkenden Hydraulikzylinder 450 auf. Der Zylinder 450 weist einen Kolben 453 in einem Volumen 451 auf und unterteilt das Volumen 451 in eine erste und zweite Kammer 451, 452. Der Zylinder weist ferner eine Kolbenstange 470 (mit Hydraulikleitungen) und eine Hydraulikübergabeeinheit 480 auf.

Die Pitchverstellung der Turbinenschaufeln 440 erfolgt gemäß dem zweiten Ausführungsbeispiel über Wasserhydraulik. Der doppelt wirkende Stellzylinder 450 ist in der Nabe 410, 430 der Turbine 400 vorgesehen. Eine Hydraulikleitung 610, 620 im rotierenden Teil wird beispielsweise durch Längsbohrungen in der Welle 600 vorgesehen. Von der Welle 600 geht es in die Nabe 430 und über die Hydraulikübergabe 480 an Längsbohrungen in der Kolbenstange 470. Durch die Hydraulikübergabeeinheit 480 kann eine Axialverschiebung der Kolbenstange 470 bei gleichzeitiger Übergabe der Hydraulikflüssigkeit erfolgen.

Im Bereich des Abschnitts 220 kann eine Notausschalteinheit 1000 vorgesehen sein, welche mit den Turbinenschaufeln 440 zusammenwirken kann, wenn diese eine Unwucht aufweisen. In einem derartigen Fall wird die Notausschalteinheit 1000 ausgelöst und die Turbine wird stillgelegt.

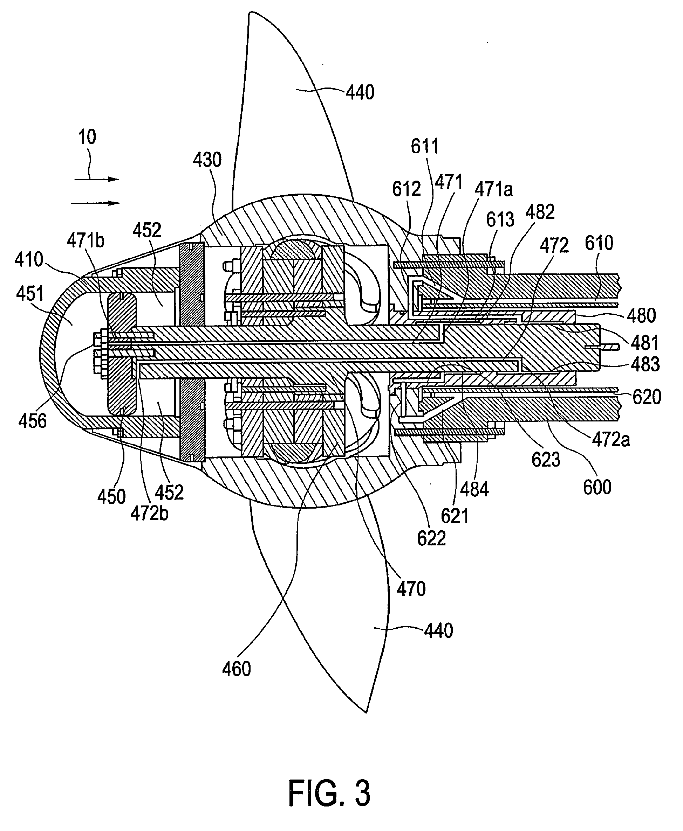

Fig. 3 zeigt schematische Schnittansicht einer Turbine für eine Wasserkraftanlage gemäß einem dritten Ausführungsbeispiel. Die Turbine weist eine Turbinenspitze (erstes Ende) 410 und eine drehbare Nabe 430 mit einer Mehrzahl von Turbinenschaufeln 440 auf. Die Turbine weist ferner einen doppelt wirkenden Hydraulikzylinder 450 im Bereich des ersten Endes 410, eine Kolbenstange 470 mit Hydraulikleitungen 471, 472 und eine Hydraulikübergabeeinheit 480 auf.

An die Turbine schließt sich eine Welle 600 an. Eine erste Hydraulikleitung 610 mit einem ersten, zweiten und dritten Abschnitt 611, 612 und 613 sowie eine zweite Hydraulikleitung 620 mit einem ersten, zweiten und dritten Abschnitt 621, 622, 623 sind vorgesehen. Der erste Abschnitt 611 der ersten Hydraulikleitung 610 und der erste Abschnitt 621 der zweiten Hydraulikleitung 620 ist in oder an der Welle 600 vorgesehen. Der zweite Abschnitt 612 der ersten Hydraulikleitung 610 und der zweite Abschnitt 622 der zweiten Hydraulikleitung 620 ist in der Nabe 430 vorgesehen. Der dritte Abschnitt 613 der ersten Hydraulikleitung 610 und der dritte Abschnitt 623 der zweiten Hydraulikleitung 620 ist in bzw. an der Hydraulikübergabeeinheit 480 bzw. in dem Übergabezylinder vorgesehen.

Der dritte Abschnitt 613 der Hydraulikleitung 610 mündet in einen ersten Abschnitt 481 einer Hydraulikübergabeeinheit 480. Der dritte Abschnitt 623 der zweiten Hydraulikleitung 620 mündet in einen zweiten Abschnitt 484 der Hydraulikübergabeeinheit 480.

In der Kolbenstange 470 ist ein erster und zweiter Hydraulikkanal 471, 472 vorgesehen. Ein erstes Ende 471a des ersten Hydraulikkanals 471 mündet in den Bereich des ersten Abschnittes 482 der Hydraulikübergabeeinheit 480. Das zweite Ende 471 b der Hydraulikleitung 471 mündet in einen ersten Abschnitt 451 einer Hydraulikkammer. Der erste Abschnitt 472a der zweiten Hydraulikleitung 472 endet im Bereich eines dritten Abschnitts 483 der Hydraulikübergabeeinheit 480. Das zweite Ende 472b der zweiten Hydraulikleitung 472 endet in einer zweiten Kammer 452, die als ein Ring ausgebildet sein kann. Der erste Abschnitt 481 und der dritte Abschnitt 483 der Hydraulikübergabeeinheit 480 können als ein umlaufender Ring oder Kanal ausgestaltet sein. Damit besteht eine Verbindung zwischen dem ersten und dritten Abschnitt 481, 483, welcher dazu dient, die Hydraulikflüssigkeit von dem dritten Abschnitt 613 in den zweiten Hydraulikkanal 472 (oder umgekehrt) fließen zu lassen. Der zweite Abschnitt 484 und der erste Abschnitt 482 der Hydraulikübergabeeinheit 480 können ebenfalls einen Ring oder einen umlaufenden Kanal ausbilden, so dass der erste und zweite Abschnitt 482, 484 als ein gemeinsamer Abschnitt ausgebildet sein können. Dadurch kann Hydraulikflüssigkeit von dem ersten Hydraulikkanal 471 zu dem dritten Abschnitt 623 der zweiten Hydraulikleitung 620 (oder umgekehrt) fließen.

Eine Pitchwinkelverstelleinheit 460 zur Pitchverstellung der Turbinenschaufeln 440 ist mit der Kolbenstange 470 gekoppelt, so dass sich die Pitchwinkelverstelleinheit 460 bewegt, wenn sich die Kolbenstange 470 bewegt.

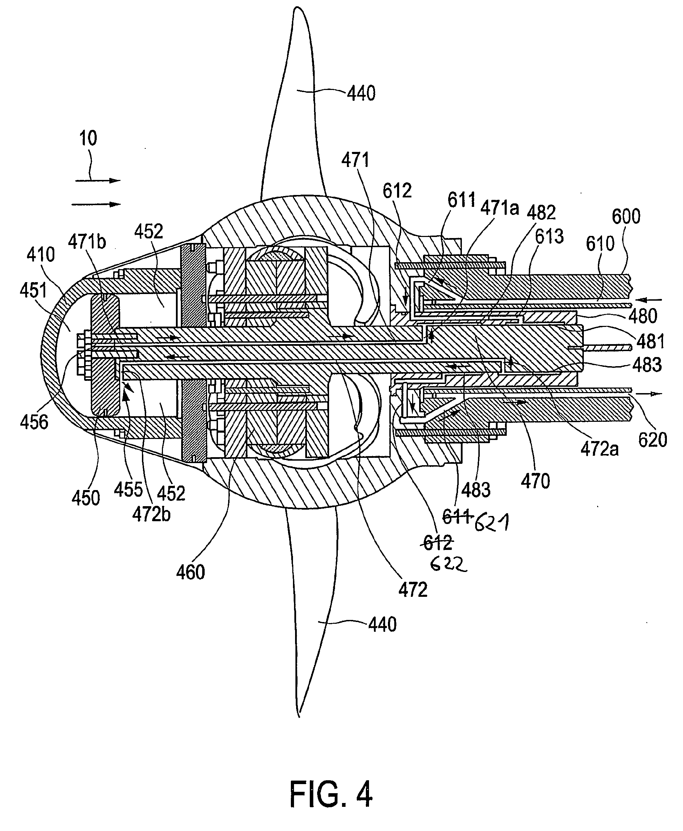

Fig. 4 zeigt eine schematische Schnittansicht der Turbine gemäß dem dritten Ausführungsbeispiel. Der Aufbau der Turbine gemäß Fig. 4 entspricht dem Aufbau der Turbine gemäß Fig. 3. In dem in Fig. 4 dargestellten Fall wird Hydraulikflüssigkeit (beispielsweise Wasser) in die erste Hydraulikleitung 610 gedrückt. Die Hydraulikflüssigkeit fließt dann durch den ersten, zweiten und dritten Abschnitt 611, 612, 613 der ersten Hydraulikleitung 610 in den vierten Abschnitt 481 der Hydraulikübergabeeinheit 480. Da der vierte und dritte Abschnitt 481, 483 der Hydraulikübergabeeinheit 480 als ein umlaufender Ring oder Kanal ausgestaltet sind, fließt die Hydraulikflüssigkeit dann durch den Ring oder Ringkanal 481, 483 über das erste Ende 472a der Hydraulikleitung 472 durch die zweite Hydraulikleitung 472 zu dem zweiten Ende 472b der Hydraulikleitung 470 und von dort in die Hydraulikkammer 452. Damit wird der Druck in der zweiten Hydraulikkammer 452 vergrößert, so dass sich der doppelt wirkende Hydraulikzylinder nach links bewegt. Die Hydraulikflüssigkeit in der ersten Hydraulikkammer 451 fließt dann von dem zweiten zu dem ersten Ende 471b, 471a des zweiten Kanals 471 und zu dem Abschnitt 482 der Hydraulikübergabeeinheit 480, d. h. zu dem Ring oder Ringkanal 482, 483. Von dem ersten Abschnitt 482 fließt die Hydraulikflüssigkeit zu dem zweiten Abschnitt 483 und von diesem Abschnitt durch die Abschnitte 623, 622 und 621 in die zweite Hydraulikleitung 620.

Wenn somit Hydraulikflüssigkeit in die erste Hydraulikleitung 610 gedrückt wird, dann bewegt sich die Kolbenstange 472 (und damit auch die Pitchwinkelverstelleinheit 460) nach links, d. h. entgegen der Durchströmungsrichtung 10.

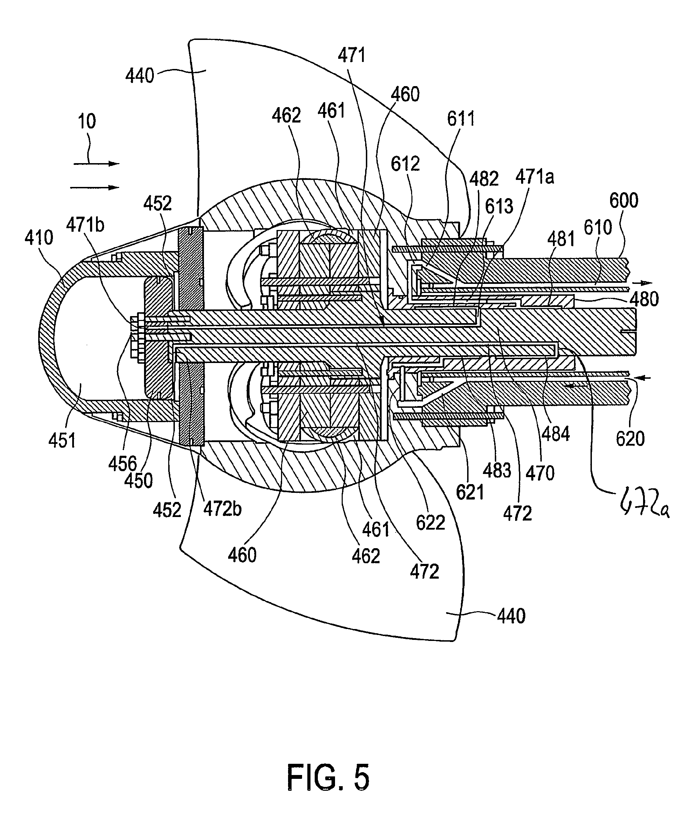

Fig. 5 zeigt eine schematische Schnittansicht der Turbine gemäß dem dritten Ausführungsbeispiel. Die Ausgestaltung der Turbine von Fig. 5 entspricht der Ausgestaltung der Turbine von Fig. 3 oder Fig. 4. In Fig. 5 ist die Situation gezeigt, dass Hydraulikflüssigkeit durch die zweite Hydraulikleitung 620 eingeführt wird. Die Hydraulikflüssigkeit fließt somit durch die zweite Hydraulikleitung 620 in den ersten, zweiten und dritten Abschnitt 621, 622, 623. Von dort fließt die Hydraulikflüssigkeit durch den Abschnitt 483 in den Abschnitt 482, d. h. durch den Ring oder Ringkanal. Von dem Abschnitt 482 fließt die Hydraulikflüssigkeit in das erste Ende 471a der Hydraulikleitung 471 in die Kolbenstange 470. Die Hydraulikflüssigkeit fließt dann durch die erste Hydraulikleitung 471 bis zum zweiten Ende 471b und von dort in die erste Hydraulikkammer 451, so dass die Kolbenstange 470 nach rechts, d. h. in Durchströmrichtung 10, bewegt wird. Somit fließt die Hydraulikflüssigkeit aus der zweiten Kammer 452 durch das zweite Ende 472b der zweiten Hydraulikleitung 472 zu dem zweiten Ende 472a der zweiten Hydraulikleitung und von dort in den Abschnitt 484 und weiter in den Abschnitt 481. Von dem Abschnitt 481 wiederum fließt die Hydraulikflüssigkeit durch die Abschnitt 613, 612 und 611 und dann in die erste Hydraulikleitung 610.

Die erste Hydraulikleitung 610 weist einen ersten Abschnitt 611 (in bzw. an der Welle 600), einen zweiten Abschnitt 612 in der Nabe 430 und einen dritten Abschnitt 613 in der Hydraulikübergabeeinheit 480 auf.

Gemäß der Erfindung wird eine lineare translatorische Bewegung der Kolbenstange 470 in eine Rotationsbewegung der Turbinenschaufeln 440 zur Pitchverstellung umgewandelt. Dies erfolgt durch die Pitchwinkelverstelleinheit 460. An der Kolbenstange 470 ist die Pitchwinkelverstelleinheit 460 vorgesehen. Die Pitchwinkelverstelleinheit 460 weist Nuten 461 auf, welche an ihren den Rotorblattschaufeln zugewandten Enden vorgesehen sind. Die Pitchwinkelverstelleinheit 460 weist ferner für jede Turbinenschaufel einen Schlitten 462 auf, welcher an dem wurzelnahen Bereich der Turbinenschaufeln mit den Turbinenschaufeln verbunden ist. Dieser Schlitten 462 kann in den bzw. durch die Nuten 461 geführt werden. Hierbei folgt der Schlitten 462 einer geradlinigen Bewegung von 90° in Bezug auf die Kolbenachse. Die Rotorblattschaufeln 440 sind über ein Radiallager in der Nabe 430 befestigt. Der Schlitten 462 wird durch die Nut 461 in der Pitchwinkelverstelleinheit 460 geführt. Die Pitchwinkelverstelleinheit 460 weist ferner eine Stellscheibe 463 auf, welche einen Drehzapfen 464 aufweist. Der Drehzapfen 464 weist eine Lagerung für den Schlitten 462 auf, damit der Schlitten eine Rotationsbewegung durchführen kann. Um den Drehzapfen 464 herum kann der Schlitten 462 rotieren, so dass eine lineare translatorische Bewegung der Kolbenstange 460 in eine Rotationsbewegung der Turbinenschaufeln umgesetzt wird.

Damit sind die Schlitten 462 über einen Drehzapfen 464 drehbar gelagert. Die Schlitten 462 werden in der Nut 461 geführt, so dass eine lineare Bewegung der Kolbenstange in eine Rotationsbewegung umgewandelt wird.

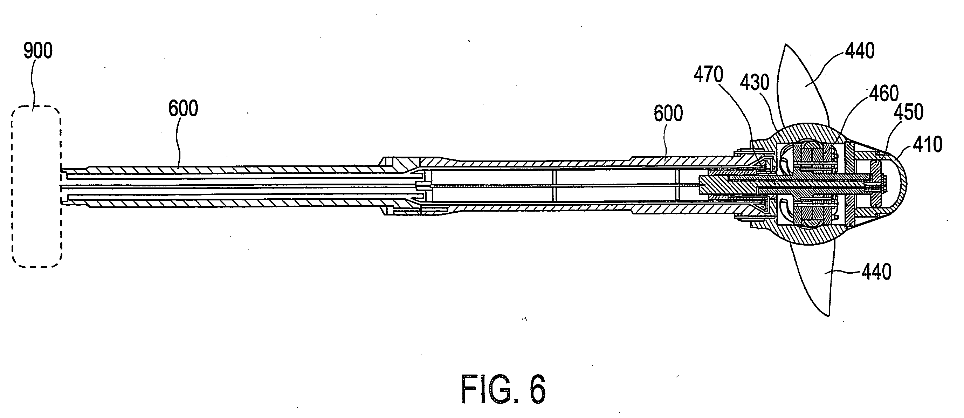

Fig. 6 zeigt eine schematische Schnittansicht einer Turbine mit einer dazugehörigen Welle für eine Wasserkraftanlage gemäß einem vierten Ausführungsbeispiel. Die Turbine kann dabei der Turbine gemäß den Fig. 3 bis 5 entsprechen. Die Nabe 430 der Turbine 400 ist mit der Welle 600 gekoppelt, welche wiederum mit einem Generator 900 gekoppelt sein kann.

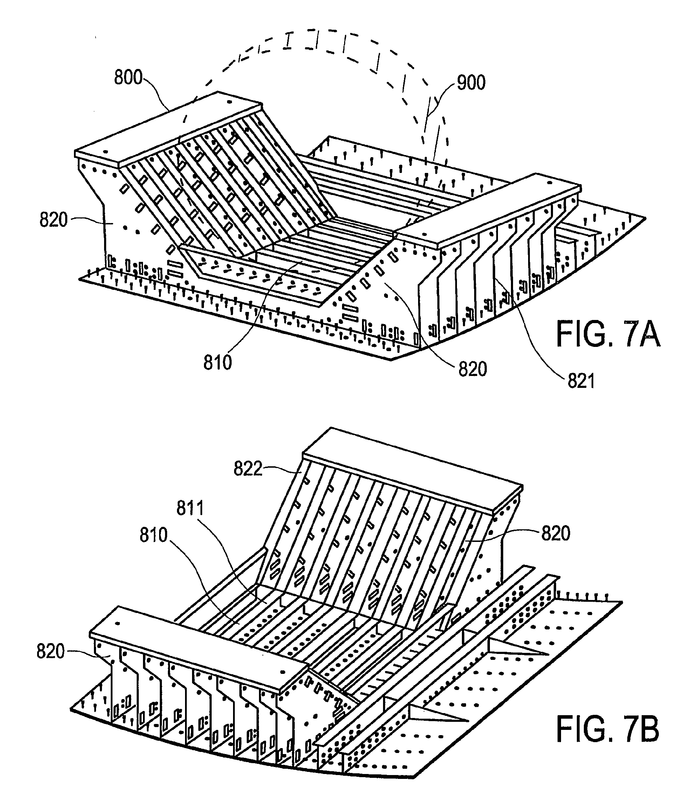

Fig. 7A und 7B zeigen jeweils eine perspektivische Ansicht einer Generatorwanne zur Aufnahme eines elektrischen Generators für eine Wasserkraftanlage. Insbesondere ist die Platzierung der Generatorwanne auf einer S-Rohr Kontur gezeigt. Die Generatorwanne 800 weist einen Boden 810 sowie zwei Seitenarme 820 auf. Die Seitenarme 820 weisen dabei einen derartigen Winkel zum Boden 810 auf, dass ein elektrischer Generator 900 darin platziert werden kann und durch die Arme 820 und den Boden 810 gehalten werden kann. Die Arme weisen an ihrer Außenseite eine Mehrzahl von Blechen 821 auf. Auf ihrer Innenseite sind eine Mehrzahl von Stegen 822 vorgesehen. Der Boden 810 weist ebenfalls eine Mehrzahl von Stegen 811 auf, welche mit den Stegen 822 ausgerichtet sein können.

Die erfindungsgemäße Generatorwanne lässt sich mit dünnen Wandstärken betonisieren und kann dabei trotzdem wasserdicht abgeschlossen werden. Die Wanne kann als Schutz für den Generator dienen.

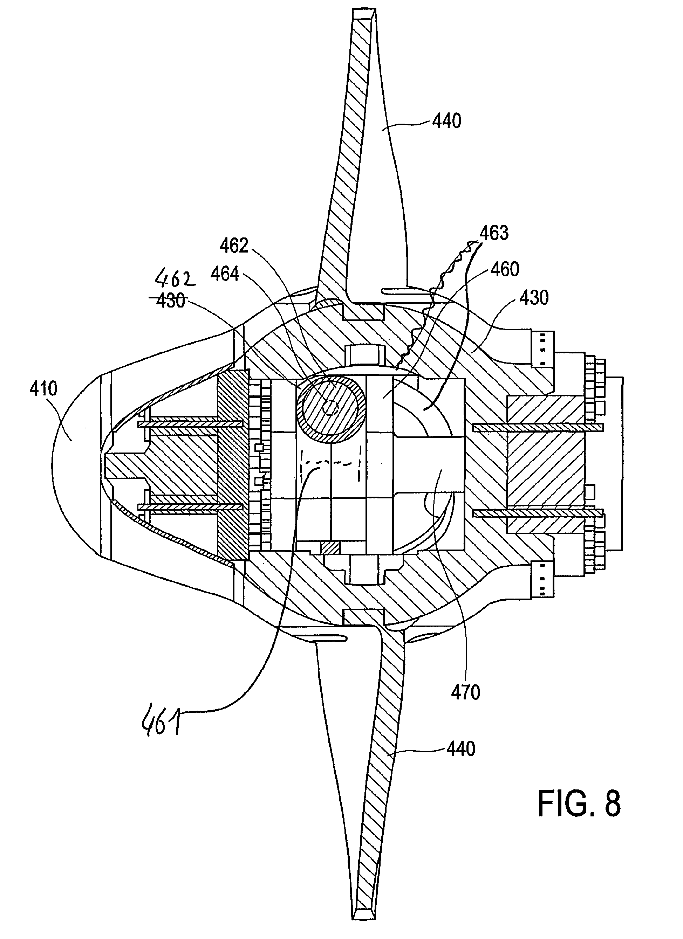

Fig. 8 zeigt eine schematische Schnittansicht einer Turbine für eine Wasserkraftanlage gemäß einem sechsten Ausführungsbeispiel. Der Aufbau der Turbine gemäß dem sechsten Ausführungsbeispiel kann dem Aufbau der Turbine gemäß dem dritten Ausführungsbeispiel entsprechen bzw. kann darauf basieren. Die Turbine weist eine Spitze bzw. Nase 410, eine Nabe 430 und eine Mehrzahl von Turbinenschaufeln 440 auf. Mittels der Pitchwinkelverstelleinheit 460 kann der Pitchwinkel der Rotorblätter 440 eingestellt werden. Die Pitchwinkelverstelleinheit 460 ist mit der Kolbenstange 470 gekoppelt, so dass eine Bewegung der Kolbenstange 470 auch zu einer Bewegung der Pitchwinkelverstelleinheit 460 führt. Die Pitchwinkelverstelleinheit 460 weist Nuten 461 auf, welche an ihren den Rotorblattschaufeln 440 zugewandten Enden vorgesehen sind. Die Pitchwinkelverstelleinheit 460 weist ferner für jede Turbinenschaufel 440 einen Schlitten 442 auf, welcher an dem wurzelnahen Bereich der Turbinenschaufeln 440 mit den Turbinenschaufeln 440 verbunden ist. Der Schlitten 462 kann in oder durch die Nut 461 geführt werden. Eine Bewegung der Kolbenstange 470 führt zu einer linearen translatorischen Bewegung der Pitchwinkelverstelleinheit, so dass die Schlitten 462 in den Nuten 461 ebenfalls bewegt werden. Eine Stellscheibe 463 ist an dem wurzelnahen Ende der Turbinenschaufel vorgesehen. Insbesondere ist die Stellscheibe 463 über einen Drehzapfen 464 verbunden, so dass sich die Stellscheibe 463 zusammen mit dem Schlitten 462 bewegen kann.

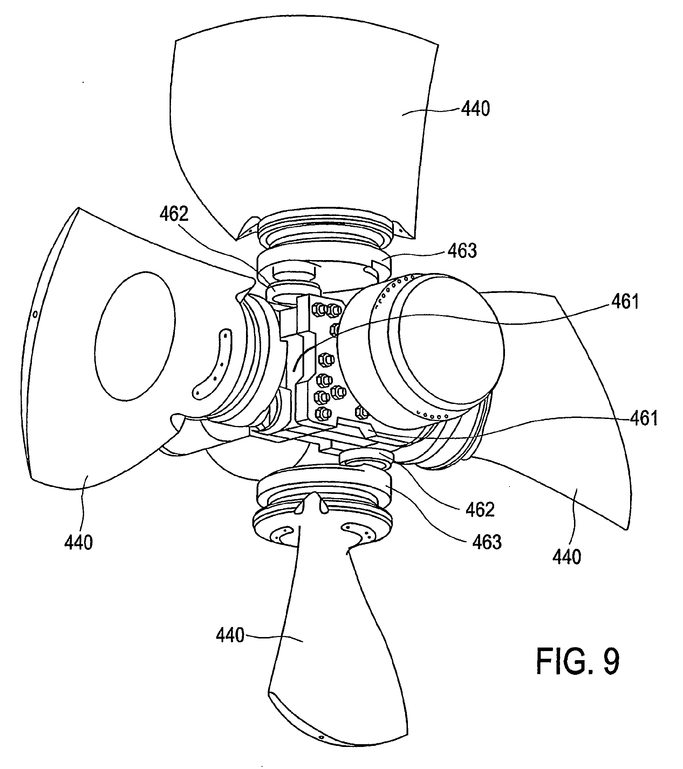

Fig. 9 zeigt eine schematische Darstellung eines Teils einer Turbine für eine Wasserkraftanlage gemäß dem sechsten Ausführungsbeispiel. In Fig. 9 sind einige Elemente der Turbine für die Wasserkraftanlage nicht dargestellt, um die Stellscheibe 463, den Schlitten 462 und die Nuten 461 besser darstellen zu können. Die Stellscheibe 463 ist an den Rotorblättern 440 befestigt. An der Stellscheibe 463 kann der Schlitten 462 vorgesehen sein, welcher wiederum in die Nuten 461 an der Pitchwinkelverstelleinheit 460 eingreifen kann. Eine Bewegung der Pitchwinkelverstelleinheit 460 bewirkt, dass die Schlitten 462, welche sich in den Nuten 461 befinden, sich ebenfalls mit bewegen, und somit eine Verstellung des Pitchwinkels der Turbinenblätter 440 bewirken.

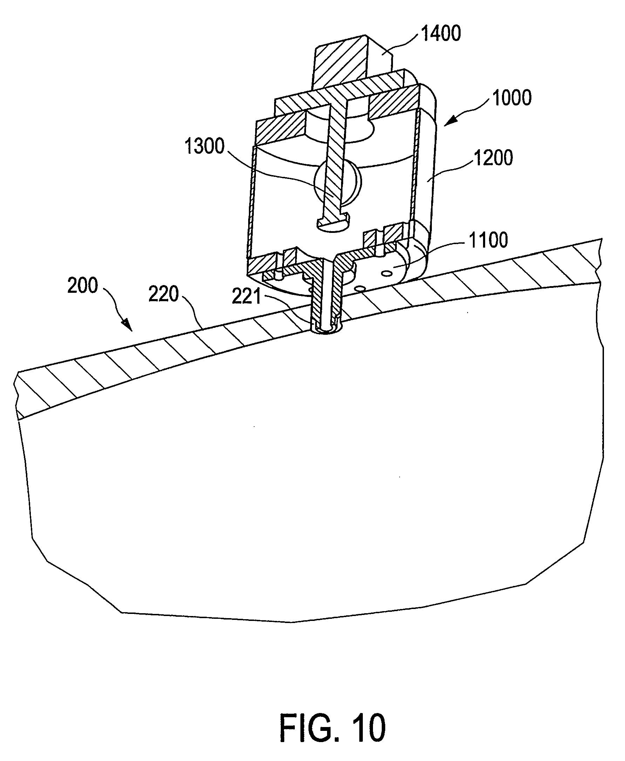

Fig. 10 zeigt einen Ausschnitt einer Turbine für eine Wasserkraftanlage gemäß einem siebten Ausführungsbeispiel. Im Bereich des zweiten Abschnitts 200 kann eine Notausschalteinheit 1000 vorgesehen sein. Hierbei ragt die Notausschalteinheit 1000 mit ihrem ersten Ende 1100 zumindest teilweise in den wasserdurchströmten Abschnitt hinein. Falls die Turbinenschaufeln 440 nicht mehr rund laufen, dann können sie in Kontakt geraten mit dem ersten Ende 1100 der Ausschalteinheit 1000. In einem derartigen Fall, kann bspw. Wasser durch das erste Ende 1100 in das Innere eines zweiten Abschnittes 1200 strömen. In dem zweiten Abschnitt ist ein Schwimmer 1300 vorgesehen, welcher bei einem Eindringen von Wasser durch das erste Ende 1100 nach oben schwimmt, so dass das zweite Ende 1400 einen Kontakt auslösen kann.

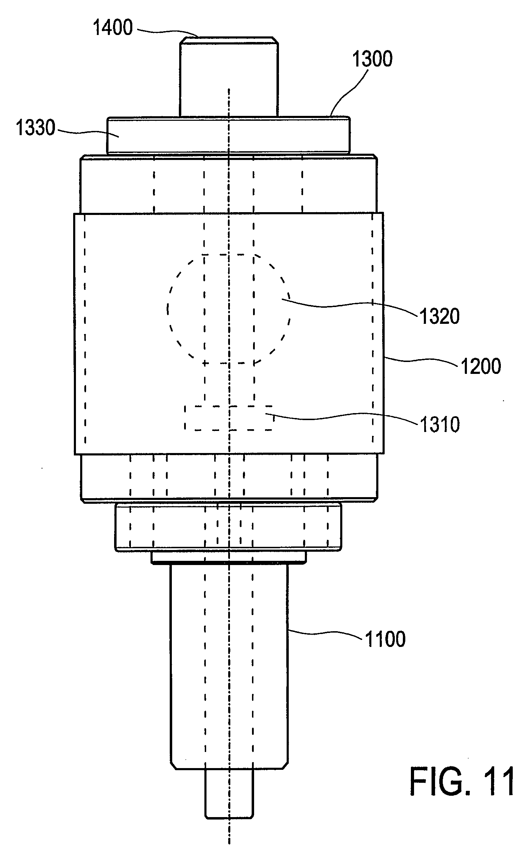

Fig. 11 zeigt eine schematische Darstellung eines Sicherheitsabschalters für eine Turbine für eine Wasserkraftanlage gemäß dem siebten Ausführungsbeispiel. Die Notausschalteinheit 1000 weist ein erstes Ende 1100 und ein zweites Ende 1400 auf. Dazwischen ist ein mittlerer Abschnitt 1200 und ein Schwimmer 1300 vorgesehen. Bei einer Unwucht der Turbinenschaufeln 440 kann ein Teil des ersten Endes 1100 abgeschlagen werden, so dass Wasser in das Innere der Ausschalteinheit eindringen kann. In dem mittleren Abschnitt 1200 ist ein Schwimmer 1300 mit einem ersten Ende 1310 und einem zweiten Ende 1330 vorgesehen. Dazwischen kann eine Schwimmeinheit 1320 vorgesehen sein. Wenn Wasser in das Innere des mittleren Abschnitts 1200 fließt, dann wird der Schwimmer 1300 auf der Oberfläche des Wassers schwimmen. Wenn der mittlere Abschnitt 1200 vollgelaufen ist, dann schwimmt der Schwimmer 1300 nach oben, so dass das zweite Ende 1400 einen Kontakt auslösen kann.

## Patentansprüche

1. Wasserkraftanlage, mit
einem ersten Abschnitt (100), dessen Innendurchmesser in Durchflussrichtung kleiner wird,
einem an den ersten Abschnitt (100) anschließenden zweiten Abschnitt (200) zur Aufnahme einer Turbine (400), wobei ein Innendurchmesser des zweiten Abschnitts zumindest teilweise eine Kugelkontur aufweist,
wobei die Turbine (400) eine Mehrzahl von Turbinenschaufeln (440) aufweist, welche innerhalb des zweiten Abschnitts (200) in dem Bereich des Innendurchmessers mit einer Kugelkontur vorgesehen sind und
einer Notausschalteinheit (1000) im Bereich des zweiten Abschnitts (200), zum Stilllegen der Turbine
wobei die Notausschalteinheit (1000) mit ihrem ersten Ende (1001) zumindest teilweise in den wasserdurchströmten zweiten Abschnitt hinein reicht, so dass für den Fall, dass die Turbinenschaufeln (440) nicht mehr rund laufen, die Turbinenschaufeln in Kontakt mit dem ersten Ende (1100) der Notausschalteinheit (1000) geraten und damit die Notausschalteinheit (1000) betätigen.

2. Wasserkraftanlage nach Anspruch 1, wobei die Turbine aufweist,
eine Nabe (430),
eine Vielzahl von Turbinenschaufeln (440), welche an der Nabe (430) vorgesehen sind,
eine Pitchwinkelverstelleinheit (460), welche mit den Turbinenschaufeln (440) gekoppelt ist, zum Verstellen des Pitchwinkels der Turbinenschaufeln,
einen doppelt wirkenden Hydraulikzylinder (450) und einer damit verbundenen Kolbenstange (470),
wobei die Kolbenstange (470) mit der Pitchwinkelverstelleinheit (460) derart gekoppelt ist, dass die Pitchwinkelverstelleinheit (460) eine Rotationsbewegung durchführt, wenn die Kolbenstange 470 in Längsrichtung bewegt wird,
wobei der doppelt wirkende Hydraulikzylinder (450) in einer Hydraulikkammer vorgesehen ist, welche über eine erste und zweite Hydraulikleitung gekoppelt sind, so dass durch Zuführen von Hydraulikflüssigkeit durch die erste oder zweite Hydraulikleitung der doppelt wirkende Hydraulikzylinder verfahrbar ist und somit über die Kopplung mit der Kolbenstange (470) und der Pitchwinkelverstelleinheit (460) zu einer Verstellung des Pitchwinkels der Turbinenschaufeln (440) führt.

3. Wasserkraftanlage nach Anspruch 2, wobei die Turbine aufweist
eine erste und zweite Hydraulikleitung (610, 620) zum Zuführen und Abführen von Hydraulikflüssigkeit,
wobei die erste und zweite Hydraulikleitung (471, 472) in der Kolbenstange (470) mit der ersten und zweiten Hydraulikleitung (610, 620) der Welle (600) gekoppelt sind, so dass Hydraulikflüssigkeit durch die erste und zweite Hydraulikleitung (610, 620) in die erste und zweite Hydraulikleitung (471, 472) der Kolbenstange (470) in die Hydraulikkammer (451, 452) fließen kann, um den doppelt wirkenden Hydraulikzylinder zu verfahren.

4. Wasserkraftanlage nach Anspruch 2 oder 3, wobei
die Hydraulikkammer durch den doppelt wirkenden Hydraulikzylinder (450) in eine erste und zweite Kammer (451, 452) aufgeteilt wird,
wobei die erste Hydraulikleitung (471) der Kolbenstange (470) in die erste Kammer (451) und die zweite Hydraulikleitung (472) in die zweite Kammer (452) mündet.

## Claims

1. Hydroelectric power station, having
a first portion (100) whose inner diameter becomes smaller in the throughflow direction,
a second portion (200) which adjoins the first portion (100) for receiving a turbine (400), wherein an inner diameter of the second portion at least partially has a spherical contour, wherein the turbine (400) has a plurality of turbine blades (440), which are provided inside the second portion (200) in the region of the inner diameter having a spherical contour, and an emergency shutdown unit (1000) in the region of the second portion (200) for stopping the turbine,
wherein the emergency shutdown unit (1000) extends with the first end (1001) thereof at least partially into the second portion through which water flows so that, in the event that the turbine blades (440) no longer run smoothly, the turbine blades come into contact with the first end (1100) of the emergency shutdown unit (1000) and consequently actuate the emergency shutdown unit (1000).

2. Hydroelectric power station according to claim 1, wherein the turbine has
a hub (430)
a large number of turbine blades (440) which are provided on the hub (430),
a pitch angle adjustment unit (460) which is coupled to the turbine blades (440) in order to adjust the pitch angle of the turbine blades,
a dual-action hydraulic cylinder (450) and a piston rod (470) which is connected thereto,
wherein the piston rod (470) is coupled to the pitch angle adjustment unit (460) in such a manner that the pitch angle adjustment unit (460) carries out a rotation movement when the piston rod (470) is moved in the longitudinal direction, wherein the dual-action hydraulic cylinder (450) is provided in a hydraulic chamber which are coupled by means of a first and second hydraulic line so that by supplying hydraulic fluid through the first or second hydraulic line the dualaction hydraulic cylinder can be moved and consequently via the coupling with the piston rod (470) and the pitch angle adjustment unit (460) leads to an adjustment of the pitch angle of the turbine blades (440).

3. Hydroelectric power station according to claim 2, wherein the turbine has
a first and a second hydraulic line (610, 620) for supplying and discharging hydraulic fluid,
wherein the first and the second hydraulic lines (471, 472) are coupled in the piston rod (470) to the first and second hydraulic line (610, 620) of the shaft (600) so that hydraulic fluid can flow through the first and second hydraulic line (610, 620) into the first and second hydraulic line (471, 472) of the piston rod (470) into the hydraulic chamber (451, 452) in order to move the dual-action hydraulic cylinder.

4. Hydroelectric power station according to claim 2 or 3, wherein
the hydraulic chamber is divided by the dual-action hydraulic cylinder (450) into a first and second chamber (451, 452), wherein the first hydraulic line (471) of the piston rod (470) opens in the first chamber (451) and the second hydraulic line (472) opens in the second chamber (452).

## Revendications

1. Centrale hydroélectrique, comprenant
un premier tronçon (100), dont le diamètre intérieur est plus petit dans le sens d'écoulement,
un deuxième tronçon (200) se raccordant au premier tronçon (100) servant à recevoir une turbine (400), dans laquelle un diamètre intérieur du deuxième tronçon présente au moins en partie un contour sphérique,
dans laquelle la turbine (400) présente une multitude de pales de turbine (440) qui sont prévues avec un contour sphérique à l'intérieur du deuxième tronçon (200) dans la zone du diamètre intérieur, et
une unité d'arrêt d'urgence (1000) dans la zone du deuxième tronçon (200) afin d'arrêter la turbine,
dans laquelle l'unité d'arrêt d'urgence (1000) atteint, par sa première extrémité (1001) au moins en partie l'intérieur du deuxième tronçon parcouru par l'eau si bien que si les pales de turbine (440) ne tournent plus, les pales de turbine viennent en contact avec la première extrémité (1100) de l'unité d'arrêt d'urgence (1000) et activent ce faisant l'unité d'arrêt d'urgence (1000).

2. Centrale hydroélectrique selon la revendication 1, dans laquelle la turbine présente
un moyeu (430),
une pluralité de pales de turbine (440), qui sont prévues au niveau du moyeu (430),
une unité d'ajustement de l'angle d'attaque (460), qui est couplée aux pales de turbine (440), servant à ajuster l'angle d'attaque des pales de turbine,
un cylindre hydraulique (450) à double action et une tige de piston (470) reliée audit cylindre hydraulique, dans laquelle la tige de piston (470) est couplée à l'unité d'ajustement d'angle d'attaque (460) de telle manière que l'unité d'ajustement d'angle d'attaque (460) exécute un mouvement de rotation lorsque la tige de piston (470) est déplacée dans la direction longitudinale,
dans laquelle le cylindre hydraulique (450) à double action est prévu dans une chambre hydraulique, qui est couplée par l'intermédiaire d'une première et d'une deuxième conduite hydraulique, si bien que le cylindre hydraulique à double action peut être déplacé par l'amenée d'un liquide hydraulique par la première ou la deuxième conduite hydraulique et donne lieu ce faisant à un ajustement de l'angle d'attaque des pales de turbine (440) par l'intermédiaire du couplage à la tige de piston (470) et à l'unité d'ajustement d'angle d'attaque (460).

3. Centrale hydroélectrique selon la revendication 2, dans laquelle la turbine présente
une première et une deuxième conduite hydraulique (610, 620) servant à amener et à évacuer du liquide hydraulique,
dans laquelle la première et la deuxième conduite hydraulique (471, 472) dans la tige de piston (470) sont couplées à la première et à la deuxième conduite hydraulique (610, 620) de l'arbre (600) si bien que du liquide hydraulique peut circuler à travers la première et la deuxième conduite hydraulique (610, 620), dans la première et dans la deuxième conduite hydraulique (471, 472) de la tige de piston (470), dans la chambre hydraulique (451, 452) afin de déplacer le cylindre hydraulique à double action.

4. Centrale hydroélectrique selon la revendication 2 ou 3, dans laquelle la chambre hydraulique est divisée en une première et en une deuxième chambre (451, 452) par le cylindre hydraulique (450) à double action,
dans laquelle la première conduite hydraulique (471) de la tige de piston (470) débouche dans la première chambre (451) et la deuxième conduite hydraulique (472) débouche dans la deuxième chambre (452).
